# EUROPÄISCHE PATENTSCHRIFT

(11) **EP 2 794 496 B1**
(45) Veröffentlichungstag und Bekanntmachung des Hinweises auf die Patenterteilung: **05.04.2017**
(21) Anmeldenummer: 12812585.3
(22) Anmeldetag: 18.12.2012
(51) Int. Cl.: C02F 9/00, C02F 1/00, C02F 1/32, C02F 1/44, C02F 1/78, C02F 1/72

(54) **MULTIBARRIERENSYSTEM ZUR WASSERAUFBEREITUNG**
MULTI-BARRIER SYSTEM FOR WATER TREATMENT
SYSTÈME MULTI-BARRIÈRE DE TRAITEMENT DE L'EAU

(30) Priorität: 22.12.2011 DE 102011056858
(43) Veröffentlichungstag der Anmeldung: 29.10.2014
(73) Patentinhaber: ITN Nanovation AG, 66117 Saarbrücken (DE)
(72) Erfinder: KASCHEK, Martin, 66386 St. Ingbert (DE); VERPLANCKE, Sylvie, 66125 Saarbrücken (DE); GRÄNITZ, Christof, 66265 Wahlschied (DE)
(74) Vertreter: Glas, Holger
(86) Internationale Anmeldenummer: PCT/EP2012/075879
(87) Internationale Veröffentlichungsnummer: WO 2013/092544

(56) Entgegenhaltungen:
- US-A1- 2003 050 196

## Beschreibung

Die vorliegende Erfindung betrifft eine Vorrichtung und ein Verfahren zur Reinigung von Abwässern. Insbesondere betrifft die vorliegende Erfindung ein Multibarrierensystem und ein Verfahren zur Entfernung pathogener Keime aus Abwässern.

Pathogene Keime sind Stoffe oder Organismen, die in anderen Organismen gesundheitsschädigende Abläufe verursachen und damit Erkrankungen dieser Organismen auslösen können. Hierbei kann es sich um Viren, Bakterien, Protozoen und Helminthen handeln. Die schädigende Wirkung dieser pathogenen Keime beruht meist auf giftigen Stoffen, insbesondere Enzymen, welche von diesen abgesondert werden oder auf der von ihnen verursachten Immunreaktion, die dadurch ausgelöst wird, dass sich die pathogenen Keime von Gewebe oder Blutzellen ernähren. Unbehandelt können diese pathogenen Keime insbesondere bei älteren und kranken Menschen, aber auch bei Kindern, zu schweren Erkrankungen oder sogar zum Tod führen.

Pathogene Keime befinden sich häufig in Abwässern, insbesondere in Abwässern von Krankenhäusern, Laboren, Schwimmbädern und tierverarbeitenden Betrieben. Um zu verhindern, dass pathogene Keime ins Grundwasser und folglich in die Böden gelangen würden, ist es häufig sinnvoll, vorgenannte Abwässer bereits am Entstehungsort zu reinigen bzw. vorzubehandeln. Das Standardverfahren für die Abwasserreinigung ist die Behandlung mit aeroben Mikroorganismen. Hierbei wird das Abwasser in ein belüftetes Becken geleitet, in dem Mikroorganismen als Flocke oder Film auf Aufwuchsträgern leben. Diese zehren unter Sauerstoffverbrauch die Abwasserinhaltsstoffe weitestgehend auf und entziehen einigen pathogenen Keimen die Lebensgrundlage. Viele pathogene Keime können sich jedoch auch in diesem Milieu halten bzw. vermehren wie z.B. verotoxinbildende Escherichia coli (VTEC), die auch als enterohämorrhagische Escherichia coli (EHEC) bekannt sind. Deshalb sollten Abwässer, welche eine hohe Anzahl an pathogenen Keimen enthalten, mit Desinfektionsverfahren behandelt werden. Hierfür stehen die im Stand der Technik bekannten Verfahren zur Verfügung. Dazu zählen insbesondere die Chlorung, thermische Desinfektion, Ozonierung, UV-Desinfektion und Filtration.

Die Chlorung ist ein chemisches Verfahren, bei dem Chlor als Gas (Chlorgas) oder Hypochloritlösung einem Abwasser zur Desinfektion zugesetzt wird wie z. B. in DE 27 38 484 beschrieben ist. Durch den Restchlorgehalt im Abwasser kann die Dosis kontrolliert werden. Allerdings sind die Kosten für die benötigten Chemikalien und die Dosierungstechnik sehr hoch. Zudem ist das Gefährdungspotential bei Umgang mit Chlorgas bzw. Hypochloritlösung extrem hoch. Weiterhin ist bekannt, dass die Chlorung von Wasser zur Bildung von flüchtigen, chlororganischen Verbindungen führt. Die meisten der bekannten Nebenprodukte sind toxische Trihalomethane (THM) und Chloramine, die im Verdacht stehen, Allergien auszulösen. Weiterhin legen zahlreiche Studien über Trihalomethane einen Zusammenhang zwischen Trink- und Badewasserchlorung und erhöhtem Risiko für Blasen-, Dickdarm-, Mastdarm- und Lungenkrebs beim Menschen nahe, weshalb auf die Chlorung von Abwässern zur Entfernung pathogener Keime verzichtet werden sollte.

Bei der thermischen Desinfektion handelt es sich um eine Methode der Desinfektion, die auf einer starken Erhitzung der zu desinfizierenden Abwässer basiert. Dieser Vorgang verringert die Keimzahl auf ein Niveau, das eine Infektion unwahrscheinlich macht. Vorteil der thermischen Desinfektion ist, dass sie sehr leicht durch einfaches Erhitzen durchführbar ist, so dass keine Chemikalien zugesetzt werden müssen und nach Abkühlen des Abwassers keine Rückstände im erhitzten Abwasser zurück bleiben. Allerdings ist dieses Verfahren überall dort nicht anwendbar, wo ein Betrieb "rund um die Uhr" stattfindet und große Mengen an Abwässern anfallen. Zudem sind die Energiekosten sehr hoch, da die Abwässer je nach Keim für mindestens 3 Minuten über 70 °C erwärmt werden müssen. Weiterhin bereitet das ab 60 °C auftretende Ausfallen von Kalk zusätzliche Probleme. Aufgrund der Tatsache, dass Abwässer nur unterhalb einer festgelegten Maximaltemperatur in die öffentlichen Abwasseranlagen eingeleitet werden dürfen, müssten bei diesem Verfahren weiterhin große Kühltanks oder -becken zum Auskühlen der erhitzten Abwässer bereit stehen.

Bei der Ozonierung werden, wie in DE 37 11 407 beschrieben, sowohl Keime als auch Algen durch das hohe Oxidationspotential des Ozon abgetötet, wodurch die Abfiltrierbarkeit der feindispersen Verunreinigungen verbessert wird. Vorteil der Ozonierung ist die reaktive Wirkung des Ozon, durch die es zu einer sehr schnellen Inaktivierung der pathogenen Keime kommt. Aufgrund der Tatsache, dass es sich bei den Abbauprodukten von Ozon lediglich um CO₂ und Sauerstoff handelt, bleiben zudem keine chemischen Rückstände in den behandelten Abwässern zurück. Die Nachteile des Ozons liegen darin, dass Ozon nicht in die Luft gelangen darf, da es sonst z. B. bei Einatmung zur Reizung der Atemwege führen kann. Zudem darf Ozon wegen seiner erheblichen Toxizität nicht in dem gereinigten Abwasser verbleiben. Ein weiterer Nachteil der Ozonisierung liegt in der Tatsache begründet, dass partikuläre Bestandteile im Abwasser und insbesondere organische Substanzen zu einem Verbrauch bzw. Abbau des Ozons führen und somit die Konzentration des Ozons unter eine kritische Schwelle sinken kann, wodurch eine sichere Desinfektion nicht mehr gewährleistet werden kann.

Die UV-Desinfektion ist ein rein physikalischer Prozess, bei dem pathogene Keime, die der UV-C-Strahlung ausgesetzt sind, sekundenschnell inaktiviert werden. Vorteil der UV-Desinfektion ist die sekundenschnelle Inaktivierung von pathogenen Keimen und die nicht vorhandene Umweltbelastung, da den Abwässern keine Chemikalien zugesetzt werden müssen. Zudem ist diese Methode nicht-korrosiv und unabhängig vom pH-Wert des Abwassers durchführbar. Nachteilig bei der UV-Desinfektion ist die Tatsache, dass nur dann eine gute Effizienz erzielt werden kann, wenn Trüb- und Farbstoffe vor der Bestrahlung weitestgehend entfernt worden sind, da sich die Eindringtiefe der UV-Strahlung in das Abwasser durch Streuung und/oder Absorption so stark reduziert, dass eine zuverlässige Desinfektion nicht mehr gewährleistet werden kann.

Die Filtration von mit pathogenen Keimen belasteten Abwässern beruht auf rein physikalischen (mechanischen) Membrantrennverfahren, wobei organische oder anorganische Filtermembranen eingesetzt werden können. Das Membrantrennverfahren unterliegt dem Prinzip des mechanischen Größenausschlusses, wobei alle Inhaltsstoffe im Abwasser, die größer als die Membranporen sind, von der Membran zurückgehalten werden. Ein Vorteil der Membranfiltration ist die Reinigung der Abwässer ohne chemische Zusätze. Zudem kann die Membran speziell auf die Bedürfnisse des Anwenders und des jeweiligen Abwassers zugeschnitten werden. Im Gegensatz zu anorganischen Filtermembranen haben organische Filtermembranen den Nachteil, dass sie nur unzureichend regeneriert bzw. gereinigt werden können, so dass solche Filtermembranen in der Regel in relativ kurzen Zeiträumen erneuert werden müssen. Zusätzlich weisen organische Membranen nur eine eingeschränkte mechanische Stabilität auf, so dass sie bei höheren Flüssigkeitsdrücken leicht beschädigt werden können. Außerdem sind Polymermembranen häufig chemisch instabil gegenüber Oxidationsmitteln wie Ozon und gegenüber Reinigungsmitteln. Die Verwendung von Filtermembranen ist zudem mit dem grundsätzlichen Problem verknüpft, dass sich während der Filtration an der Außenfläche der Membran eine Deckschicht abscheidet (das sogenannte Fouling) und somit der Filtrationswiderstand erhöht wird. Dies führt zu einer drastischen Reduzierung der Filterleistung bis hin zur totalen Verstopfung und somit zu einem Totalausfall der Filtermembran.

Die vorgenannten Systeme haben den gemeinsamen Nachteil, dass bei Ausfall oder Abfall der zentralen Abbauvorrichtung (keine oder zu geringe Chlorzufuhr, keine bzw. keine ausreichende Beheizung, zu geringe oder keine Ozonkonzentration, zu geringe oder keine UV-Bestrahlung, keine oder nachlassende Filterleistung bzw. fehlende chemische Stabilität der Polymerfiltermembranen gegen Oxidationsmittel wie O₃ und Reinigungsmittel) ein ausreichender Abbau pathogener Keime in belasteten Abwässern nicht mehr stattfindet bzw. nicht mehr gewährleistet werden kann. Desweiteren müssen die vorgenannten Systeme üblicherweise ortsgebunden installiert werden und können nicht ohne weiteres mobil eingesetzt werden. Bekannte mobile Abwasserreinigungsvorrichtungen weisen üblicherweise einen relativen hohen Wartungsbedarf und im kontinuierlichen Betrieb relative geringe Standzeiten auf.

Der vorliegenden Erfindung liegt die Aufgabe zugrunde, ein Verfahren und eine Vorrichtung zur Reinigung von Abwässern zur Verfügung zu stellen, welche die vorgenannten Nachteile des Standes der Technik soweit als möglich vermeiden. Insbesondere ist es eine Aufgabe der vorliegenden Erfindung ein mobiles System zur Reinigung von mit pathogenen Keimen belasteten Abwässern bereitzustellen, welches eine sehr sichere und zuverlässige Entkeimung über möglichst lange, weitestgehend wartungsfreie Zeiträume gewährleistet.

Diese Aufgabe wird durch ein Multibarrierensystem zur Entfernung pathogener Keime aus Abwässern gelöst, umfassend ein erstes Wasserbehältnis, eine regelbare Ozonierungseinheit, ein zweites Wasserbehältnis und eine UV-Einheit, wobei das erste Wasserbehältnis eine Ozon-resistente Filtriereinheit umfasst, welche mindestens eine Membranplatte aus einer porösen oxidischen Keramik beinhaltet, wobei die Membranplatte außenseitig eine Beschichtung und innenliegend mindestens einen Kanal zur Ableitung des Filtrats aufweist, wobei die Poren der Membranplatte einen mittleren Durchmesser zwischen 1 um und 10 µm aufweisen und die Beschichtung mindestens eine Trennschicht umfasst, die mittels eines Beschichtungsschlickers hergestellt wird, der mindestens teilweise aus nanoskaligen und/oder mikroskaligen oxidischen Partikel besteht, wobei der mindestens eine Kanal der Membranplatte mit dem zweiten Wasserbehältnis so verbunden ist, dass das Filtrat in das zweite Wasserbehältnis geleitet werden kann, wobei die regelbare Ozonierungseinheit mit einer Berieselungsanlage gekoppelt ist, wobei der Ozonauslass der Ozonierungseinheit im ersten Wasserbehältnis angebracht ist und sich der Auslass der Berieselungsanlage oberhalb des Wasserspiegels des ersten Wasserbehältnisses befindet, wobei die UV-Einheit so angebracht ist, dass das Filtrat im zweiten Wasserbehältnis mit der UV-Einheit bestrahlt wird und wobei sich das erste Wasserbehältnis, die Filtriereinheit, die regelbare Ozonierungseinheit, das zweite Wasserbehältnis und die UV-Einheit in einem geschlossenen Containment befinden.

Desweiteren wird die Aufgabe durch ein Verfahren zur Entfernung von pathogenen Keimen aus Abwässern mittels des erfindungsgemäßen Multibarrierensystems gelöst, wobei das Verfahren die folgenden Schritte umfasst:
a) Zufuhr von mit pathogenen Keimen belasteten Abwässern in das erste Wasserbehältnis,
b) Filtration der Abwässer durch die Filtriereinheit mit der mindestens einen beschichteten Membranplatte, wobei die Abwässer in dem ersten Wasserbehältnis während der Filtration mit Ozon behandelt werden und der Ozongehalt im Abwasser mit Hilfe der mit einer Berieselungsanlage gekoppelten Ozonierungseinheit gesteuert wird,
c) Einleiten des Filtrats über den mindestens einen Kanal in der Membranplatte in das zweite Wasserbehältnis,
d) Bestrahlen des Filtrats in dem zweiten Wasserbehältnis mit UV-Strahlung in einem Wellenlängenbereich von 100 nm bis 300 nm und einer Dosis von 50 J/m² bis 2000 J/m². Die Gesamtkonzentration der pathogenen Keime im Abwasser beim Ablassen des Filtrates aus dem zweiten Wasserbehältnis soll vorzugsweise kleiner als 100 KbE/ml, bevorzugter Weise kleiner 10 KbE/ml und am meisten bevorzugt kleiner 1 KbE/ml sein.

Gemäß der vorliegenden Erfindung wird ein spezifisches Multibarrierensystem zur Reinigung von Abwässern verwendet, wobei der Fokus insbesondere in der Entfernung von pathogenen Keimen aus besagten Abwässern liegt. Bei dem erfindungsgemäßen Multibarrierensystem handelt es sich um ein geschlossenes, im wesentlichen gasundurchlässiges Containment mit mindestens einem Zulauf für das mit pathogenen Keimen belastete Abwasser und mindestens einem Ablauf für das gereinigte Wasser. In dem erfindungsgemäßen Containment befinden sich zwei Wasserbehältnisse, eine Ozonierungseinheit und eine UV-Einheit. Über den Zulauf wird das erste Wasserbehältnis mit Abwasser, welches pathogene Keime enthält, versorgt. Das erste Wasserbehältnis umfasst eine Ozon-resistente Filtriereinheit, durch welche das mit pathogenen Keimen belastete Abwasser des ersten Wasserbehältnisses filtriert wird und direkt in das zweite Wasserbehältnis geleitet wird. Zusätzlich umfasst das erste Wasserbehältnis den Ozonauslass der regelbaren Ozonierungseinheit, so dass das Abwasser im ersten Wasserbehältnis mit der gewünschten Menge Ozon versetzt werden kann.

Der Auslass der Berieselungsanlage befindet sich erfindungsgemäß oberhalb des Wasserspiegels des ersten Wasserbehältnisses, so dass der Luftraum oberhalb des ersten Wasserbehältnisses mit Wasser berieselt werden kann. Die Berieselungseinheit ist gemäß der vorliegenden Erfindung mit der Ozonierungseinheit gekoppelt und kann variabel zugeschaltet werden.

Das im ersten Wasserbehältnis mit Ozon behandelte und filtrierte Abwasser wird über einen oder mehrere innenliegende Kanäle aus der Filtriereinheit in das zweite Wasserbehältnis überführt. Die erfindungsgemäß vorgesehene UV-Einheit ist derart gestaltet und angebracht, dass das Filtrat aus dem ersten Wasserbehältnis im zweiten Wasserbehältnis mit UV-Strahlung bestrahlt werden kann.

Ein wesentlicher Vorteil des erfindungsgemäßen Multibarrierensystems und des erfindungsgemäßen Verfahrens liegt in dem Zusammenspiel der einzelnen, in dem Containment integrierten, Desinfektionseinheiten, umfassend Filtriereinheit, Ozonierungseinheit und UV-Einheit. Diese sind gemäß der vorliegenden Erfindung so miteinander verknüpft, dass die Vorteile der einzelnen Verfahren erhalten bleiben, die aufgeführten Nachteile aber wenigstens teilweise kompensiert werden. Zudem gewährleistet das erfindungsgemäße Multibarrierensystem ein hohes Maß an Sicherheit, da auch bei Ausfall einer der Komponenten eine starke bzw. ausreichende Reduktion der Konzentration pathogener Keime im Abwasser erreicht wird. Zudem ist das erfindungsgemäße Multibarrierensystem in einem Containment untergebracht, so dass es mobil beispielsweise für die Entkeimung von Krankenhausabwässern eingesetzt werden kann. Durch das Zusammenspiel der Einheiten des erfindungsgemäßen Multibarrierensystems ist darüber hinaus ein langer, im wesentlichen wartungsfreier Betrieb des Systems bzw. des Abwasserreinigungsprozesses möglich.

Nachfolgend werden die einzelnen Einheiten bzw. Stufen des erfindungsgemäßen Multibarrierensystem bzw. des erfindungsgemäßen Verfahrens zur Reinigung von mit pathogenen Keimen belasteten Abwässern beschrieben.

Die erste Stufe in dem Multibarrierensystem bildet die Ozonierungseinheit. Durch kontinuierliche Ozonierung des Abwassers im ersten Wasserbehältnis wird die Ozonkonzentration des Abwassers vorzugsweise konstant in einem Bereich zwischen 0,1 mg/l bis 0,3 mg/l gehalten.

Durch die Ozonierung werden sowohl pathogene Keime als auch organische Substanzen die sich im Abwasser befinden oxidiert bzw. abgetötet, wodurch die Filtrierbarkeit dieser Substanzen verbessert wird. Das erste Wasserbehältnis ist zudem so ausgelegt, dass die typische Aufenthaltszeit bzw. Verweilzeit des belasteten Abwassers in diesem Wasserbehältnis ausreicht, um die pathogenen Keime in dem Abwasser vollständig oder weitestgehend abzutöten. Somit bildet die Ozonierungseinheit die erste Barriere für die pathogenen Keime in dem Multibarrierensystem. Ein großer Vorteil der erfindungsgemäßen Ozonierungseinheit liegt in der Tatsache, dass sie sich in einem weitestgehend gasundurchlässigen Containment befindet, wodurch verhindert wird, dass Ozon in die Umgebungsluft gelangt. Ein weiterer entscheidender Vorteil ist die Kopplung der erfindungsgemäß vorgesehenen Ozonierungseinheit mit einer Berieselungsanlage. Hierdurch kann das in das Abwasser im ersten Wasserbehältnis eingeleitete Ozon, das sich nicht im Wasser löst, sondern in den Luftraum über dem Abwasser im ersten Wasserbehältnis steigt, durch berieseln gelöst und somit dem Abwasser zusätzlich zugeführt werden. Daher stellt die Berieselungsanlage nicht nur einen weiteren Schutzmechanismus gegen den unerwünschten Austritt von Ozon aus dem Containment dar, sondern bietet auch die Möglichkeit unverbrauchtes Ozon dem Abwasser wieder zuzuführen, wodurch der Gesamtverbrauch an Ozon verringert werden kann. Außerdem kann die Gesamtkonzentration an Ozon im ersten Wasserbehältnis so nicht nur über die regelbare Ozonierungseinheit, sondern auch über die gekoppelte, zuschaltbare Berieselungseinheit gesteuert werden.

Die zweite Barriere des Multibarrierensystems bildet die Filtriereinheit, welche mindestens eine keramische Membranplatte umfasst, wobei die Membranplatte derart ausgestaltet ist, dass sie außenseitig eine Beschichtung und innenliegend mindestens einen Kanal zur Ableitung des Filtrats aufweist. Die ozonierten Abwässer in dem ersten Wasserbehältnis werden mit der erfindungsgemäß vorgesehenen Filtriereinheit filtriert, wodurch weitere pathogene Keime bzw. organische Substanzen, welche nicht durch die Ozon-Behandlung oxidiert bzw. deaktiviert wurden, zurückgehalten werden.

Durch das Zurückhalten der zu filtrierenden Substanzen im Abwasser kann sich ein sogenannter Kuchen, also eine Fouling- bzw. Scalingschicht auf der Membranplatte bilden, der die Poren der Membran mit der Zeit blockiert bzw. verstopft. Dies hat zur Folge, dass sich der Membranfiltrationsfluss beim Filtrieren des Abwassers deutlich verringert. Daher müsste zum Ablösen dieses Kuchens auf der Membran eine regelmäßige Reinigung durchgeführt werden. Hierzu wird zum Beispiel im Stand der Technik vorgeschlagen den Permeatstrom umzukehren, so dass das Filtrat entgegengesetzt wieder durch die Filtermembran gedrückt wird (Rückspülung). Zudem erfolgt die Rückspülung in der Regel mit sauberem Wasser, was zu einer Reduzierung des Nettofluxes und damit zur Herabsetzung der Effizienz des Systems führt. Allerdings erfordert dieses Vorgehen in der Regel zusätzliches Equipment und eine Unterbrechung der regulären Abwasserreinigung. Daher liegt ein weiterer Vorteil des erfindungsgemäßen Multibarrierensystems und des erfindungsgemäßen Verfahrens in der Kombination von Ozonierungseinheit und Filtriereinheit im ersten Wasserbehältnis. Durch die Ozonkonzentration im Abwasser des ersten Wasserbehältnisses werden pathogene Keime und organische Substanzen, welche den Kuchen bilden, an der Membran oxidiert und zersetzt, so dass es zu keinem Blockieren bzw. Verstopfen der Membran kommt. Die erfindungsgemäße Membran ist gegenüber Ozon durchlässig, d. h. das Ozon kann die Membran passieren und so in das zweite Wasserbehältnis gelangen. Durch die erfindungsgemäße Kombination von Ozonbehandlung und Filtration kann das sogenannte Fouling, welches auch im innenliegenden Kanal der Membranplatte stattfindet kann, unterbunden werden. Somit werden die an der Filtrationsmembran haftenden pathogenen Keime und organischen Substanzen beim Passieren der Membran durch das Ozon angegriffen, wodurch es zu einer Selbstreinigung der Filtriereinheit kommt.

Die erfindungsgemäße Filtriereinheit ist so ausgestaltet, dass das Abwasser durch Anlegen von Unterdruck an dem innenliegenden Kanal durch die Membran filtriert wird.

Die erfindungsgemäß vorgesehene UV-Einheit stellt die dritte Barriere des Multibarrierensystems gemäß der vorliegenden Erfindung dar. Durch die UV-Desinfektion werden gegebenenfalls verbliebene pathogene Keime, welche die Ozonierungseinheit und die Filtriereinheit passiert haben, inaktiviert. Durch die der UV-Einheit vorgeschaltete Filtriereinheit wird erfindungsgemäß eine hohe Eindringtiefe der UV-Strahlung in das Abwasser erzielt und ungewollte Streuung und/oder Absorption stark reduziert. Somit gestattet die Kombination aus Filtriereinheit und UV-Einheit eine Maximierung der Wirkung der UV-Einheit. Ein weiterer Vorteil liegt in der Kombination aus Ozonierungseinheit und nachgeschalteter UV-Einheit. Wie oben bereits dargelegt passiert das Ozon die Membran und gelangt somit in das zweite Wasserbehältnis. Das gereinigte Abwasser welches das erfindungsgemäße Containment verlässt, darf jedoch kein giftiges Ozon mehr enthalten. Im zweiten Wasserbehältnis kommt die vorteilhafte Kombination der UV-Einheit und des Ozons zum Tragen. Das im Filtrat verbliebene Ozon wird durch die UV-Bestrahlung angeregt, so dass sich vermehrt Sauerstoffradikale bilden, wodurch etwaige vorhandene organische Moleküle oxidiert werden. Somit wird die Wirkung des Ozons um ein Vielfaches verstärkt. Sind keine organischen Substanzen im Filtrat vorhanden, bewirkt das UV-Licht, dass die gebildeten Sauerstoffradikale mit sich selbst reagieren und Luftsauerstoff (O₂) bilden, der nicht mehr toxisch ist. Das aggressive Ozon wird folglich durch die UV-Behandlung abgebaut, wobei gegebenenfalls noch vorhandene organische Substanzen aufoxidiert werden.

Das mit pathogenen Keimen versetzte Abwasser passiert somit im erfindungsgemäßen Multibarrierensystem wenigstens drei Barrieren (Ozonisierungseinheit, Filtriereinheit und UV-Einheit). Das oben beschriebene Multibarrierensystem ist demnach geeignet pathogene Keime aus Abwässern so vollständig zu entfernen, dass das desinfizierte Abwasser in die Kanalisation eingeleitet werden kann. Da jede Barriere für sich geeignet ist die pathogenen Keime aus dem Abwasser zu entfernen, bietet die erfindungsgemäße Vorrichtung ein hohes Maß an Sicherheit für den Fall dass z. B. eine der Komponenten ausfällt. Bei herkömmlichen Systemen besteht die Gefahr, dass ein Ausfall nicht entdeckt bzw. das Abwasser nicht schnell genug umgeleitet werden kann und somit pathogene Keime in die Kanalisation gelangen. Dies muss möglichst verhindert werden. Durch das erfindungsgemäße Multibarrierensystem wird die Möglichkeit der Kontamination des in die Kanalisation gelangenden Abwassers deutlich verringert, da selbst beim Ausfall von einer Barriereeinheit, noch immer zwei voll funktionstüchtige Barrieren zur Verfügung stehen. Durch die Kombination der Barrieren entsteht somit zusätzliche Sicherheit für den Anwender.

Ein weiterer Vorteil liegt in der geringen Ausfallwahrscheinlichkeit des Systems begründet. Insbesondere das Verhindern von Biofouling an der Membranoberfläche der Filtriereinheit reduziert die Ausfallwahrscheinlichkeit der Vorrichtung, verlängert die Standzeiten im kontinuierlichen Betrieb und kann höhere Flüsse gewährleisten.

Nachfolgend werden die einzelnen Komponenten und verwendeten Begrifflichkeiten näher erläutert.

"Abwasser" umfasst kommunale und industrielle Abwässer sowie Niederschlags- bzw. Kanalwasser , die keinen oder nur einen sehr geringen Salzgehalt aufweisen und mit einer Organikfracht, die zumindestens teilweise biologisch behandelbar ist, beladen ist. Diese Abwässer werden meist auch als Schwarzwasser oder Grauwasser bezeichnet.

Ein "Multibarrierensystem" gemäß der vorliegenden Erfindung ist ein System, das mehrere nacheinander gestaffelte Barrieren bzw. Reinigungseinheiten enthält. Die Barrieren bzw. Reinigungseinheiten des Multibarrierensystems sind dazu geeignet pathogene Keime aus dem Abwasser zu entfernen.

"Pathogene Keime" gemäß der vorliegenden Erfindung sind Stoffe oder Organismen, die in anderen Organismen gesundheitsschädigende Abläufe verursachen und damit Erkrankungen dieser Organismen auslösen können. Zu den pathogenen Keimen zählen insbesondere Viren, Bakterien, Protozoen und Helminthen.

Ein "Containment" im Sinne der vorliegenden Erfindung ist ein Behältnis oder Container, der das erste Wasserbehältnis, die Ozonierungseinheit mit gekoppelter Berieselungsanlage, das zweite Wasserbehältnis und die UV-Einheit umfasst. Zudem weist das erfindungsgemäße Containment mindestens einen Zulauf für das belastete Abwasser und einen Ablauf für das gereinigte Abwasser auf.

Ein "geschlossenes Containment" bzw. "gasundurchlässiges Containment" im Sinne der vorliegenden Erfindung ist ein Containment, welches so gestaltet, dass kein Austritt von Ozon und belasteten Abwasser erfolgen kann. Demnach wird das Containment vorzugsweise unter Verwendung eines Materials gefertigt, das geringe Permeationskoeffizienten gegenüber Ozon aufweist.

Eine "Ozon-resistente" Filtriereinheit ist eine Filtriereinheit die bei einer Behandlung mit Ozon ohne Funktions- und Effizienzeinbußen betrieben werden kann. Insbesondere sind die Membranmaterialien der Filtriereinheit nicht oxidationsempfindlich.

Die Filtriereinheit der vorliegenden Erfindung umfasst mindestens eine Membranplatte aus einer porösen oxidischen Keramik. Weiterhin umfasst die Filtriereinheit gemäß einer Ausführungsform eine Halterung. Eine für die Filtriereinheit geeignete Halterung ist in DE 10 2006 022 502 oder der DE 10 2008 036 920 offenbart.

Eine "Keramik" im Sinne der vorliegenden Erfindung ist dabei ein anorganischer nichtmetallischer Werkstoff der bei Raumtemperatur aus einer Rohmasse geformt ist und dabei seine typischen Werkstoffeigenschaften durch einen Sintervorgang bei hohen Temperaturen erhält.

Eine "oxidische" Keramik im Sinne der vorliegenden Erfindung besteht im Wesentlichen aus Metalloxiden. Bevorzugt sind Keramiken auf Basis von Oxiden der Metalle Mg, Ca, Sr, Ba, Al, Si, Sn, Sb, Pb, Bi, Ti, Zr, V, Mn, Nb, Ta, Cr, Mo, W, Fe, Co, Ru, Zn, Ce, Y, Sc, Eu, In, und La oder Mischungen davon. Besonders bevorzugt sind Keramiken auf Basis von Aluminiumoxid und Zirkonoxid und am meisten bevorzugt sind Keramiken auf Basis von Aluminiumoxid.

"Porös" im Sinne der vorliegenden Erfindung bedeutet, dass die Membranplatte über Poren verfügt, durch die das Abwasser filtriert werden kann. Die poröse oxidische Keramik der Membranplatte (Substrat) weist vorzugsweise Poren mit einem mittleren Durchmesser zwischen 1 µm und 10 µm, besonders bevorzugt zwischen 1 µm und 6 µm, insbesondere zwischen 1 µm und 3 µm, auf. Der mittlere Porendurchmesser wird dabei mittels Quecksilberporosimetrie bestimmt.

Weiterhin weist die Membranplatte außenseitig eine Beschichtung auf, wobei die Beschichtung mindestens eine Trennschicht umfasst, die mittels eines Beschichtungsschlickers hergestellt wird, der nanoskalige und/oder mikroskalige Partikel enthält bzw. aus nanoskalige und/oder mikroskalige Partikel enthaltenden Zusammensetzungen gefertigt wird. Vorzugsweise wird die mindestens eine Trennschicht aus einer Zusammensetzung mit einem Anteil an nanoskaligen Partikeln in dem Beschichtungsschlicker von mindestens 5 Gew.-%, besonders bevorzugt von mindestens 25 Gew.-%, insbesondere von mindestens 40 Gew.-%, bezogen auf das Gesamtgewicht des Schlickers gefertigt.

"Nanopartikel" im Sinne der vorliegenden Erfindung sind Partikel mit einem mittleren Partikeldurchmesser (auch als mittlere Partikelgröße bezeichnet) von nicht mehr als 1000 nm, bevorzugter Weise unter 500 nm und am meisten bevorzugt unter 100 nm oder aber re-dispergierbare Agglomerate solcher Partikel. "Mikropartikel" im Sinne der vorliegenden Erfindung sind Partikel mit einem mittleren Partikeldurchmesser (auch mittlere Partikelgröße bezeichnet) im Bereich von mehr als 1 µm und 50 µm, bevorzugter Weise im Bereich von 2 µm und 20 µm und am meisten bevorzugt im Bereich von 5 µm und 10 µm. Unter dem mittleren Partikeldurchmesser wird vorliegend, sofern nicht anders angegeben, der Partikeldurchmesser bezogen auf das Volumenmittel verstanden (D₉₀-Wert). Der D₉₀-Wert wird mittels dynamischer Lichtstreuung, beispielsweise mit einem UPA (Ultrafine Particle Analyser) bestimmt. Das Prinzip der dynamischen Lichtstreuung ist auch unter den Bezeichnungen "Photonenkorrelationsspektroskopie" (PCS) oder "quasielastische Lichtstreuung" (QELS) bekannt. Bei besonders kleinen Partikeln können auch quantitative elektronenmikroskopische Methoden (insbesondere TEM) verwendet werden. Darüber hinaus kann zu Bestimmung der Primärpartikelgröße auch Röntgenbeugung (XRD) verwendet werden. Weiterhin ist es möglich die Primärpartikelgröße in Suspension mittels Lasergranulometrie, beispielsweise mit einem Lasergranulometer der Firma CILAS zu bestimmen.

"Beschichtungsschlicker" im Sinne der vorliegenden Erfindung ist der Schlicker der für die Herstellung der Beschichtung, welche mindestens eine Trennschicht umfasst, verwendet wird. Ein "Schlicker" im Sinne der vorliegenden Erfindung ist ein Wasser-Mineralgemisch (auch Masse) zur Herstellung von Keramikerzeugnissen.

Erfindungsgemäß kann die Beschichtung auf der Membranplatte ausschließlich aus der mindestens einen Trennschicht bestehen. In einer besonders bevorzugten Ausführungsform umfasst die Beschichtung aber noch mindestens eine weitere poröse Schicht, die zwischen der Membranplatte und der mindestens einen Trennschicht angeordnet ist. Bei der mindestens einen Trennschicht handelt es sich dabei bevorzugt um die außenliegende Schicht, an der im Wesentlichen die Abtrennung der Mikroorganismen erfolgt.

Die auf der Membranplatte befindliche Gesamtbeschichtung, umfassend mindestens eine Trennschicht weist vorzugsweise eine Dicke zwischen 100 nm und 150 µm, vorzugsweise zwischen 500 nm und 100 µm, insbesondere von ca. 25 µm bis 60 µm, auf.

Die Dicke der mindestens einen Trennschicht liegt vorzugsweise im Bereich zwischen 100 nm und 75 µm, insbesondere im Bereich zwischen 5 µm und 50 µm, insbesondere bei ca. 25 µm.

Die Porengröße der Poren in der mindestens einen Trennschicht liegt bei einem mittleren Durchmesser zwischen 1 nm und 1400 nm, vorzugsweise zwischen 50 nm und 500 nm, insbesondere zwischen 50 nm und 300 nm, besonders bevorzugt zwischen 200 nm und 300 nm. Die Porengröße der Poren in der wenigstens einen Trennschicht ist abhängig von der Zusammensetzung des Beschichtungsschlickers. Nanopartikel fungieren bei relativ niedrigen Sintertemperaturen als Bindemittel für die Mikropartikel in der Trennschicht. Durch eine Erhöhung des Anteils an Nanopartikel im Beschichtungsschlicker kann die Porengröße bzw. die Sintertemperatur verringert werden. Die Porengröße der Poren wird bei einem mittleren Durchmesser ≥ 100 nm mittels Quecksilberporosimetrie und bei mittleren Durchmessern unter 100 nm mittels Bubble Point (auch Blasendruck-Test oder Blaspunkt-Messung genannt) ermittelt.

In Abhängigkeit vom mittleren Porendurchmessers kann eine Mikro- oder Ultrafiltration durchgeführt werden oder eine Kombination aus beiden Verfahren. Liegt der mittlere Porendurchmesser der Trennschicht unter 100 nm so handelt es sich typischerweise um eine Ultrafiltration, während es sich bei einem mittleren Porendurchmesser von über 100 nm typischweise um eine Mikrofiltration handelt. Die Übergänge zwischen den beiden Filtrationsarten sind fließend und hängen auch immer von der Porengeometrie und der verwendeten Meßmethode ab.

Gesinterte Membranen weisen gegenüber Polymermembranen einen anderen Filtrationsmechanismus auf. Deshalb sind die numerischen Trenngrenzen (Cut-off-Werte) für Polymermebranen nicht direkt mit denen gesinterter Membranen mit einem ähnlichen mittleren Porendurchmesser vergleichbar.

Unter der erfindungsgemäßen Trennschicht können sich ggf. noch weitere Schichten bzw. weitere Trennschichten befinden. Es ist bevorzugt, dass darunterliegende Schichten im Verhältnis zur außenliegenden Trennschicht größere Poren aufweisen. Besonders bevorzugt besteht die Porengröße betreffend ein Gefälle zur außenliegenden Trennschicht hin. So ist es bevorzugt, dass nach außen hin die Porengrößen sinken. Die weiteren porösen Schichten bzw. Trennschichten die ggf. zwischen der mindestens einen äußeren Trennschicht und der Membranplatte liegen, weisen Porengrößen auf, die zwischen der Größe der Poren der äußeren Trennschicht (geringste Porengrößen) und der Größe der Poren der Membranplatte (hat die größten Poren) liegen. Dies gilt insbesondere für die Mittelwerte der Porengrößen innerhalb der Schichten (da die Porengröße innerhalb einer Schicht oft nicht einheitlich ist, kann es gegebenenfalls zu Überlappungen im Hinblick auf die absoluten Porengrößen kommen, so dass beispielweise die Größe der größten Poren der mindestens einen Trenn-Schicht die Größe der kleinsten Poren der mindestens einen weiteren porösen Schicht überschreiten kann).

Bei den Nanopartikeln bzw. Mikropartikeln in der Trennschicht handelt es sich vorzugsweise um oxidische Nanopartikel, insbesondere um Aluminiumoxid-Partikel. Daneben können insbesondere auch Nanopartikel aus Zirkoniumdioxid oder Titandioxid oder auch Mischungen aus den genannten oxidischen Nanopartikeln bevorzugt sein. Für besonders dünne Trennschichten sind insbesondere Zeolithe sehr gut geeignet. In weiteren bevorzugten Ausführungsformen kann es sich bei den Nanopartikeln auch um nichtoxidische Nanopartikel handeln.

Weiterhin weist die Membranplatte innenliegend mindestens einen Kanal zur Ableitung des Filtrats auf. Bevorzugt sind jedoch mehrere, vorzugsweise parallel zueinander angeordnete Kanäle, die sich gleichmäßig über den Innenraum der Membranplatte erstrecken. Das Filtrat wird vorzugsweise durch kontinuierliches oder diskontinuierliches Anlegen von Unterdruck auf der Kanalseite der Filtriereinheit erhalten. Dabei wird das Abwasser durch die Membran bzw. Filtriereinheit aus dem ersten Wasserbehältnis in den oder die Kanäle gesaugt und in das zweite Wasserbehältnis überführt. Hierbei kommt das Filtrat nicht mehr in Kontakt mit dem mit pathogenen Keimen versetzten Abwasser in dem ersten Wasserbehältnis. In einer bevorzugten Ausführungsform laufen alle innenliegenden Kanäle der Membranplatte zusammen, so dass nur ein Sammelkanal pro Membranplatte mit dem zweiten Wasserbehältnis verbunden ist. In einer besonders bevorzugten Ausführungsform laufen alle innenliegenden Kanäle der Membranplatten zusammen, so dass nur ein Kanal pro Filtriereinheit mit dem zweiten Wasserbehältnis verbunden ist. Je mehr Kanäle gebündelt werden umso größer ist der jeweilige Kanaldurchmesser.

Bei der Wahl der Form der Membranplatte bestehen erfindungsgemäß keine Restriktionen. So können etwa runde oder rechteckige Membranplatten, abgestimmt auf den jeweiligen Einzelfall, bevorzugt sein.

Zudem muss die Größe der Membranplatten auf die jeweilige Anwendung abgestimmt werden. Grundsätzlich gilt, je größer die Oberfläche der Membranplatten ist, desto höher ist der potentielle Durchsatz an Abwässern pro Zeiteinheit. Die maximale Ausdehnung der Membranplatten ist lediglich durch die räumliche Begrenzung des ersten Wasserbehältnisses definiert. In einer bevorzugten Ausführungsform übersteigt die Membranplatte eine Länge und Breite von 150 cm nicht. In einer besonders bevorzugten Ausführungsform weist die Membranplatte eine Länge von ungefähr 50 cm und eine Breite von ungefähr 11 cm auf.

Die Dicke einer Membranplatte liegt erfindungsgemäß vorzugsweise im Bereich zwischen 0,15 mm und 20 mm, insbesondere zwischen 0,5 mm und 10 mm. In einer besonders bevorzugten Ausführungsform weist eine Membranplatte eine Dicke von ungefähr 6 mm auf.

Weiterhin ist die Anzahl der Membranplatten abhängig von den jeweiligen Anforderungen des Multibarrierensystems. Sind zwei oder mehrere Membranplatten vorhanden so werden diese in Serie, und vorzugsweise parallel zueinander, angeordnet. Bei relativ geringen Mengen an Abwasser ist die Anordnung von 3 bis 15 und vorzugsweise 3 bis 10 Membranplatten pro Filtriereinheit bevorzugt. Fallen größere Mengen an Abwasser an, so sind jedoch auch Filtrationsvorrichtungen mit einer entsprechend hohen Zahl an Platten denkbar. Vorzugsweise weist die Filtriereinheit einen modularen Aufbau auf, der es erlaubt, die Anzahl der Membranplatten entsprechend der jeweiligen Anforderung zu variieren.

Das erste Wasserbehältnis umfasst mindestens eine Filtriereinheit. Es können jedoch auch mehrere Filtriereinheiten in dem Wasserbehältnis vorhanden sein. Die Menge an Filtriereinheiten sollte an die zu bewältigende Abwassermenge angepasst werden.

In einer weiteren Ausführungsform umfasst die Filtriereinheit Ozon-resistente Schwingzungen. Diese sind beweglich zwischen den einzelnen Membranplatten befestigt und können sich im Abwasserstrom bewegen. Durch diese Bewegung können die Schwingzungen über die Membranplattenoberfläche streifen um dadurch mögliche Beläge, die sich auf dieser gebildet bzw. abgesetzt haben abzustreifen. Die Schwingzungen können z. B. aus biegbaren Streifen insbesondere aus biegbaren Plastikstreifen, Baumwolle oder Kunstfasern bestehen. In einer weiteren Ausführungsform können die Schwingzungen fadenartig ausgebildet sein. Die Schwingzungen sind so ausgeformt, dass sie Beläge auf den Membranplatten abstreifen können ohne dabei die Membranplatten und deren Beschichtung zu zerstören.

In einer weiteren Ausführungsform ist an das erste Wasserbehältnis eine Zudosiereinheit angeschlossen. Diese kann sich innerhalb oder außerhalb des Containments befinden. Mittels der Zudosiereinheit können in das erste Wasserbehältnis vor, während oder nach dem Betrieb des Multibarrierensystems zusätzliche Additive den Abwässern zudosiert werden. So kann z. B. eine zusätzliche Kohlenstoffquelle z. B. in Form einer Zuckerlösung zu den Abwässern zudosiert werden um den Bakterien, welche sich im ersten Wasserbehältnis befinden, Nährstoffe zuzuführen. Weiterhin besteht die Möglichkeit Komplexbildner z. B. EDTA den Abwässern zuzuführen um Ionen wie z. B. Ca²⁺ zu komplexieren um damit ein Verkalken der Filtriereinheit und der innenliegenden Kanäle zu verhindern. Weiterhin können über die Zudosiereinheit Reinigungsmittel dem ersten Wasserbehältnis zugeführt werden, die dafür geeignet sind die Filtriereinheit zu reinigen. Mögliche Reinigungsmittel sind z. B. Zitronensäure bzw. wässrige Zitronensäurelösungen oder wässrige Natriumhypochlorit- oder Wasserstoffperoxidlösung. Die Zudosierung kann sowohl kontinuierlich als auch semi-kontinuierlich erfolgen.

Weiterhin umfasst das erfindungsgemäße Multibarrierensystem eine regelbare Ozonierungseinheit, die mit einer Berieselungsanlage gekoppelt ist. Im Sinne der vorliegenden Erfindung ist eine "Ozonierungseinheit" eine Apparatur, die dazu geeignet ist, Ozon (O₃) zu erzeugen. Die erforderliche Ozonmenge wird von der Ozonierungseinheit produziert und dem Abwasser im ersten Wasserbehältnis oder im Zulauf kontinuierlich oder diskontinuierlich zugeführt. Erfindungsgemäß ist die Ozonierungseinheit regelbar, d.h. die Menge an produziertem Ozon lässt sich je nach Verbrauch einstellen und hängt von der Belastung des Abwassers ab.

Weiterhin ist die Ozonierungseinheit mit einer Berieselungsanlage gekoppelt, wobei sich der Auslass der Berieselungsanlage im Luftraum oberhalb des Wasserspiegels des ersten Wasserbehältnisses befindet. Hierdurch kann das Ozon, das sich nicht im Abwasser löst, sondern in den Luftraum über dem Abwasser im ersten Wasserbehältnis steigt, durch berieseln wieder gelöst und somit dem Abwasser erneut zugeführt werden. Daher stellt die Berieselungsanlage nicht nur einen weiteren Schutzmechanismus dar, um zu verhindern dass Ozon in die Abluft außerhalb des Containments gelangt, sondern bietet auch die Möglichkeit unverbrauchtes Ozon dem Abwasser wieder zuzuführen, wodurch die Gesamtkonzentration an verbrauchtem Ozon deutlich reduziert werden kann. Die Berieselungsanlage kann gemäß der vorliegenden Erfindung sowohl eine als auch mehrere Sprinklerdüsen enthalten. Weiterhin kann das Wasser, welches für die Berieselungsanlage verwendet wird sowohl von einer externen Wasserquelle stammen wie auch dem ersten und/oder zweiten Wasserbehältnis entnommen werden. Ein weiterer Vorteil der Berieselungsanlage liegt in der möglichen Reinigung der Filtriereinheit mittels der Berieselungsanlage. Sollte die Reinigung der Filtriereinheit aufgrund übermäßigen Foulings bzw. aufgrund des Verstopfens der Filtriereinheit notwendig werden, so kann das Abwasser im ersten Wasserbehältnis abgelassen werden und die Filtriereinheit mit Hilfe der Berieselungsanlage freigespült werden.

Weiterhin umfasst das erfindungsgemäße Multibarrierensystem eine UV-Einheit, die im Multibarrierensystem so angebracht ist, dass das Filtrat im zweiten Wasserbehältnis mit der UV-Einheit bestrahlt wird. Im Sinne der vorliegenden Erfindung ist eine "UV-Einheit" eine Strahlenquelle, welche dazu geeignet ist UV-Strahlung, eine energiereiche elektromagnetische Strahlung, auszustrahlen. Das ultraviolette Spektrum der UV-Einheit kann dabei Wellenlängen von 1 nm bis 380 nm umfassen, was einem Frequenzbereich der Strahlung von 789 THz (380 nm) bis 300 PHz (1 nm) entspricht. Die UV-Strahlung lässt sich in UV-A, UV-B und UV-C Strahlung unterteilen. Die UV-A Strahlung wird dabei auch nahes UV oder Schwarzlicht genannt und umfasst Wellenlängen von 380 nm bis 315 nm. Die UV-B Strahlung wird dabei auch mittleres UV oder Dorno-Strahlung genannt und umfasst Wellenlängen von 315 nm bis 280 nm. Die UV-C Strahlung umfasst Wellenlängen von 280 nm bis 100 nm, wobei sie in UV-C-FUV (fernes UV, 280 nm bis 200 nm) und UV-C-VUV (Vakuum-UV, 200 nm bis 100 nm) unterteilt wird. Zwischen 100 nm bis 1 nm folgt das sogenannte extreme UV. In einer bevorzugten Ausführungsform generiert die UV-Einheit den UV-C-Bereich, insbesondere den bakteriziden UV-C-Bereich der mit dem UV-C-FUV-Bereich übereinstimmt. In einer weiteren bevorzugten Ausführungsform liefert die UV-Einheit die Wellenlänge von 253 nm, da bei dieser Wellenlänge das Absorptionsmaximum der Mikroorganismen liegt. Bei der UV-Einheit kann es sich beispielsweise um eine Quecksilberdampflampe eine Xenonlampe, eine Amalgamlampe oder eine UV-LED-Lampe handeln.

In einer weiteren Ausführungsform ist das Containment des Multibarrierensystems transportabel. "Transportabel" im Sinne der vorliegenden Erfindung bedeutet, dass das Containment transportiert werden kann, also nicht fest an einem Platz stehen muss. Das produzierte Multibarrierensystem kann daher vorteilhafterweise einsatzbereit ab Werk geliefert werden und muss nicht einzeln vor Ort gebaut werden. Zudem kann es relativ einfach an einen anderen Ort versetzt werden. Je nach Größe und Gewicht des Containments sind hierzu Maschinen wie z. B. Kran, Hebebühne oder Schwerlasttransporter notwendig. Bei dem Containment kann es sich beispielsweise um einen 20 Fuß-, einen 40 Fuß oder einen 45 Fuß-Container, bevorzugt standardisierte Überseecontainer handeln. In einer besonders bevorzugten Ausführungsform weißt das Containment maximale Abmessungen von 6,06 m x 2,44 m x 2,59 m (20-Fuß-Container) und vorzugsweise ein Höchstgewicht von 25.000 kg auf.

Weiterhin betrifft die vorliegende Erfindung ein Verfahren zur Entfernung von pathogenen Keimen aus Abwässern mittels des voranstehend beschriebenen Multibarrierensystems. Das Verfahren umfasst die nachfolgenden Schritte:
a) Zufuhr von mit pathogenen Keimen belasteten Abwässern in das erste Wasserbehältnis. Bevorzugt handelt es sich bei den Abwässern um Abwässer aus einem Krankenhaus. Diese gelangen über eine Abwasserleitung oder mittels einer Wasserpumpe über den Zulauf in das erste Wasserbehältnis des Containments.
b) Filtration der Abwässer durch die Filtriereinheit mit der mindestens einen beschichteten Membranplatte, wobei die Abwässer in dem ersten Wasserbehältnis während der Filtration mit Ozon behandelt werden.
c) Einleiten des Filtrats über den mindestens einen Kanal in der Membranplatte, in das zweite Wasserbehältnis.
d) Bestrahlen des Filtrats in dem zweiten Wasserbehältnis mit UV-Strahlung in einem Wellenlängenbereich von 100 nm bis 300 nm und einer Dosis von 50 J/m² bis 2000 J/m².

Durch das erfindungsgemäße Verfahren kann die die Gesamtkonzentration der sich im Wasser befindenden pathogenen Keime eliminiert bzw. deutlich reduziert werden. In einer Ausführungsform ist die Gesamtkonzentration der sich im Wasser befindenden pathogenen Keime beim Ablassen des Filtrates aus dem zweiten Wasserbehältnis kleiner 100 KbE/ml, bevorzugter Weise kleiner 10 KbE/ml und am meisten bevorzugt kleiner 1 KbE/ml.

In einer weiteren Ausführungsform des erfindungsgemäßen Verfahrens wird die Anzahl der sich im Abwasser befindenden pathogenen Keime zu mindestens 99,90%, bevorzugter Weise zu mindestens 99,99% aus dem Abwasser entfernt werden.

Die im Zusammenhang mit der erfindungsgemäßen Vorrichtung, dem Multibarrierensystem beschriebenen Definitionen, Ausführungsformen und Vorteile gelten in gleichem Maße für das erfindungsgemäße Verfahren.

Wie bereits voranstehend dargelegt, bildet sich durch das Zurückhalten der pathogenen Keime bzw. organischen Substanzen auf den Membranplatten der Filtriereinheit häufig ein sogenannter Kuchen bzw. Belag, der die Poren der Membran mit der Zeit blockiert bzw. verstopft. Außerdem kann es in den innenliegenden Kanälen der mindestens einen Membranplatte zum sogenannten Fouling kommen. Diese Prozesse werden erfindungsgemäß durch die Ozonbehandlung reduziert bzw. vermieden. Das Ozon durchdringt in einer bevorzugten Ausführungsform des erfindungsgemäßen Verfahrens die mindestens eine Membranplatte der Ozon-resistenten Filtriereinheit während des Betriebes. Dadurch kann der Kuchen an der Membran oxidiert und zersetzt werden, so dass es zu keinem Blockieren bzw. Verstopfen der Membran kommt. Zudem kann dadurch das Fouling in dem innenliegenden Kanal der Membranplatte verlangsamt bzw. unterbunden werden.

Die Ozonkonzentration im ersten Wasserbehältnis wird vorzugsweise so eingestellt, dass die von der Ozonierungseinheit gelieferte Menge an Ozon ausreicht, damit sowohl pathogene Keime als auch organische Substanzen, die sich im Abwasser befinden, oxidiert bzw. abgetötet werden. Die benötigte Menge an Ozon ist somit abhängig von der Anzahl der pathogenen Keime und sonstigen Verunreinigungen im Abwasser. Um die Ozonmenge einstellen bzw. regeln zu können, wird die Ozonkonzentration im Filtrat im Ablauf des ersten Wasserbehältnisses detektiert. Sinkt die Ozonkonzentration unter den voreingestellten Sollwert, regelt eine Steuerung, die mit dem Detektor und der Ozonierungseinheit verbunden ist, auf einen höheren Wert und/oder die Berieselungsanlage wird zugeschaltet. Ist die Ozonkonzentration im Filtrat zu hoch, so wird die Ozonproduktion mittels einer Steuerung gedrosselt. In einer bevorzugten Ausführungsform des erfindungsgemäßen Verfahrens wird die dem ersten Wasserbehältnis zuzuführende Menge an Ozon so reguliert, dass die Konzentration an Ozon im Filtrat im Ablauf zwischen 0,1 mg/l und 0,3 mg/l beträgt.

Ein weiterer entscheidender Vorteil des erfindungsgemäßen Verfahrens liegt in der Kopplung der Ozonierungseinheit mit einer Berieselungsanlage. Hierdurch kann das Ozon, das sich nicht im Abwasser löst, sondern in den Luftraum über dem Abwasser im ersten Wasserbehältnis steigt, durch berieseln wieder gelöst und somit dem Abwasser erneut zugeführt werden. Daher stellt die Berieselungsanlage nicht nur einen weiteren Schutzmechanismus dar, um zu verhindern dass Ozon in die Abluft außerhalb des Containments gelangt, sondern bietet auch die Möglichkeit unverbrauchtes Ozon dem Abwasser wieder zuzuführen, wodurch die Gesamtkonzentration an verbrauchtem Ozon deutlich reduziert werden kann. In einer besonders bevorzugten Ausführungsform des erfindungsgemäßen Verfahrens wird die Ozonkonzentration im Luftraum in dem ersten Wasserbehältnis detektiert und die Berieselungsanlage ab einem Wert von 0,5 mg/m³, bevorzugter Weise ab einem Wert von 0,3 mg/m³ und am meisten bevorzugt ab einem Wert von 0,1 mg/m³ automatisch angeschaltet. In einer weiteren Ausführungsform kann das Wasser für die Berieselungsanlage dem ersten und/oder zweiten Wasserbehältnis entnommen werden.

Ein Nachteil der UV-Desinfektion liegt in der Tatsache, dass nur dann eine gute Wirkung erzielt werden kann, wenn eine hohe Eindringtiefe erzielt werden kann. Trüb- und Farbstoffe reduzieren die Eindringtiefe der UV-Strahlung in das Abwasser durch Streuung und/oder Absorption so stark, dass eine sichere Desinfektion nicht mehr gewährleistet werden kann. Durch die zwei vorangeschalteten Barrieren in dem erfindungsgemäßen Multibarrierensystem (in Form der Filtrier- und Ozonierungseinheit) kann die Trübung des Filtrats deutlich reduziert werden, wodurch die Eindringtiefe der UV-Strahlen im zweiten Wasserbehältnis deutlich erhöht wird.

In einer weiteren bevorzugten Ausführungsform ist die Trübung des sich im zweiten Wasserbehältnisses befindlichen Wassers kleiner 1 NTU (Nephelometric Turbidity Unit), bevorzugter Weise kleiner 0,5 NTU und am meisten bevorzugt kleiner 0,2 NTU ist.

Durch die erhöhte Eindringtiefe der UV-Strahlen wird eine größere Anzahl an Keimen bei gleichbleibender Dosis an UV-Strahlung zerstört. Anders ausgedrückt kann die Dosis der UV-Bestrahlung gegenüber einem System reduziert werden, welches keine Ozonierungs- und Filtriereinheit enthält.

In einer bevorzugten Ausführungsform des erfindungsgemäßen Verfahrens zur Entfernung von pathogenen Keimen aus Abwässern ist die Dosis der UV-Bestrahlung um den Faktor 2, bevorzugter Weise um den Faktor 3 und am meisten bevorzugt um den Faktor 4 gegenüber einem System zur Entfernung von pathogenen Keimen aus Abwässern, welches keine Filtriereinheit umfasst, reduziert.

Wie bereits oben dargelegt liefert die Kombination der einzelnen Verfahren aufgrund synergistischer Effekte neue Vorteile für die Funktion und Stabilität des Gesamtprozesses. Üblicherweise verursachen Keime Fouling auf den Membranplatten. Dieser Belag muss nach einer gewissen Zeit mechanisch, physikalisch oder chemisch entfernt werden. Während dieser Zeit kann die Anlage nicht genutzt werden. Die Zeit von einer Reinigung bis zur nächsten wird auch als die sogenannte Standzeit bezeichnet. Durch die synergistischen Effekte der Ozonierungs- und UV-Einheit mit der Filtrierenheit kann die Standzeit des Multibarrierensystems um den Faktor 5, bevorzugter Weise um den Faktor 10 und am meisten bevorzugt um den Faktor 15 gegenüber einem System zur Entfernung von pathogenen Keimen aus Abwässern ohne Ozonierungs- und UV-Einheit, verlängert werden.

In einer weiteren Ausführungsform ist dem erfindungsgemäßen Verfahren eine biologische Reinigungsstufe vorgeschaltet. In der Regel besteht die biologische Reinigungsstufe aus einem Belüftungsbecken in dem Kleinstlebewesen unter ständiger Luftzufuhr die im Abwasser noch enthaltenen biologischen Verunreinigungen abbauen. Hierdurch können organische Stoffe des Abwassers durch Mikroorganismen bereits abgebaut und anorganische Stoffe teilweise oxidiert werden. In einer weiteren Ausführungsform kann es sich bei der biologischen Reinigungsstufe um eine MBR-Reinigungsstufe (Membrane-Bio-Reactor) handeln.. In einer bevorzugten Ausführungsform handelt es sich bei der biologischen Reinigungsstufe um eine MBBR-Reinigungsstufe. Bei dem sogenannten Moving Bed Biofilm Reactor-Verfahren, welches auch als Schwebebett-Verfahren bekannt ist, werden sowohl die Vorteile der klassischen Belebung als auch die Vorteile der bekannten Biofilmverfahren miteinander kombiniert. So wird einerseits wie bei der Belebung das gesamte verfügbare Beckenvolumen genutzt, andererseits wie bei den meisten Biofilmverfahren auf die Rückschlammführung verzichtet. Das Biofilm-Trägermaterial bewegt sich dabei frei im Wasser und wird durch ein Ablaufsieb im Becken gehalten. Biomasse, die sich vom Trägermaterial ablöst, wird ggf. als Überschussschlamm aus dem Reaktor ausgetragen und in der Nachklärung abgeschieden. Durch die vorgeschaltete biologische Reinigungsstufe kann das Abwasser vorgereinigt werden, so dass Schwebstoffe und ähnliche Verunreinigungen großenteils aus dem Abwasser entfernt werden, bevor es in das Containment geleitet wird. Die biologische Reinigungsstufe kann auch in dem erfindungsgemäßen Containment betrieben werden und liegt dann dort als Filtrationskammer vor. Somit ist sowohl ein externer Betrieb als auch ein in das Containment integrierter Betrieb der biologischen Reinigungsstufe möglich. Die Anzahl der Filtrationskammern kann größer eins liegen. Die Kammern können aerob und/oder anoxisch betrieben werden und sind daher mit regelbaren Gebläsen ausgestattet. Die Kammern sind bevorzugt als schweißbare Kunststofftanks, vor allem aus PE gefertigt.

In einer weiteren Ausführungsform ist dem erfindungsgemäßen Verfahren ein sogenannter Equalizertank (Vorratstank) vorgeschaltet. Dieser ermöglicht die Lagerung der Abwässer vor Einbringen in das Multibarrierensystem bzw. in das erste Wasserbehältnis. Mit Hilfe des Equalizertanks können die Abwässer vor Einleiten in das erste Wasserbehältnis gesammelt werden, wodurch die Zusammensetzung dieser Abwässer vor Einleiten in das erste Wasserbehältnis homogenisiert werden kann. Somit werden Einleitungsspitzen vermieden. Der Equalizertank kann sich sowohl innerhalb als auch außerhalb des Containments befinden.

Das erfindungsgemäße Verfahren ermöglicht die Entfernung von pathogenen Keimen aus Abwässern. Zu den pathogenen Keimen zählen unter anderem Viren, Bakterien, Protozoen und Helminthen.

Viren sind hierbei definiert als infektiöse Partikel, die sich außerhalb von Zellen (extrazellulär) durch Übertragung verbreiten, aber nur innerhalb einer geeigneten Wirtszelle (intrazellulär) vermehren können und selbst nicht aus Zellen bestehen. Mögliche Viren, die sich in Abwässern befinden und durch das erfindungsgemäße Verfahren entfernt werden können sind z. B. Enteroviren wie z. B. Polioviren, Coxsackieviren und Echoviren, Reoviren wie z. B. Rotaviren, Adenoviren, Astroviren und Calciviren wie z. B. Coronaviren und Hepatitisviren.

Bakterien sind hierbei definiert als prokaryotische Mikroorganismen (Mikroorganismen bei denen die DNA nicht in einem vom Cytoplasma durch eine Doppelmembran abgegrenzten Zellkern enthalten ist, sondern frei im Cytoplasma, und zwar zusammengedrängt im Nucleoid liegt), die typischerweise Größen von bis zu einigen µm erreichen können und unterschiedliche Formen wie z. B. Kugeln, Stäbchen, Spirillen, Kugelketten, Stäbchenketten etc. aufweisen. Mögliche Bakterien, die sich in Abwässern befinden und durch das erfindungsgemäße Verfahren entfernt werden können sind z. B. Enterobakterien wie z. B. Escherichia coli, Shigella, Salmonella und Yersinia, sowie Bakterien der Gattungen Brucella, Francisella, Pseudomonas, Vibrio z. B. Vibrio cholerae, Campylobacter, Heliobacter, Leptospira, Listeria, Bacillus, Clostridium, Mycobacterium z. B. Mycobacterium tuberculosis, Mycplasma, Chlamydia, Staphylococcus und Legionella.

Protozoen sind hierbei definiert als eukaryotische (Mikroorganismen mit einem Zellkern) Mikroorganismen. Mögliche Protozoen, die sich in Abwässern befinden und durch das erfindungsgemäße Verfahren entfernt werden können sind z. B. Giardia lamblia, Cryptosporidium parvum, Entamoeba histolytica, Entamoeba dispar und Naegleria fowleri.

Helminthen sind hierbei definiert als mehrzellige endoparasitäre Organismen. Mögliche Helminthen, die sich in Abwässern befinden und durch das erfindungsgemäße Verfahren entfernt werden können sind z. B. Helminthen der Gattung der Nematoden z. B. Ascaris lumbricoides, Trichuris trichuria und Enteribius vermicularis und Helminthen der Gattung der Cestoden z. B. Taenia species.

Insbesondere eignet sich das erfindungsgemäße Verfahren dazu, Bakterien aus dem Abwasser zu entfernen. In einer besonders bevorzugten Ausführungsform sind die zu entfernenden Bakterien ausgewählt aus der Gruppe bestehend aus Escherichia coli, Salmonella, Shigella, Mykobakterium tuberculosis und Vibrio cholerae.

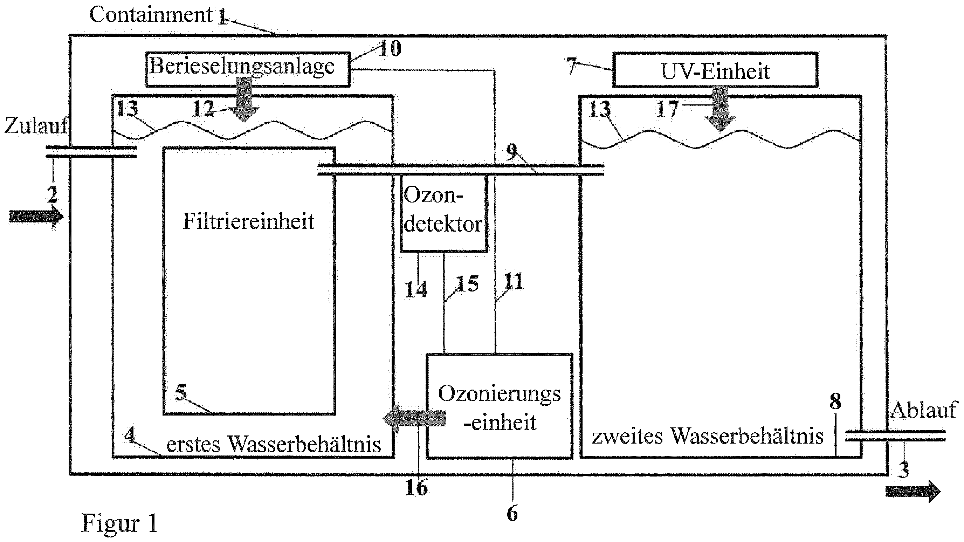

Eine schematische Darstellung einer möglichen Ausführungsform des erfindungsgemäßen Multibarrierensystems ist in Figur 1 gezeigt:
Das erfindungsgemäße Multibarrierensystem umfasst ein abgeschlossenes bzw. gasundurchlässiges Containment 1 mit mindestens einem Zulauf 2 für das mit pathogenen Keimen belastete Abwasser und mindestens einem Ablauf 3 für das gereinigte Wasser. Das Containment 1 umfasst weiterhin ein erstes Wasserbehältnis 4 welches die Ozon-resistente Filtriereinheit 5, eine Ozonierungseinheit 6, eine UV-Einheit 7 und ein zweites Wasserbehältnis 8 enthält. Die Filtriereinheit 5 ist über mindestens einen Ablauf 9 mit dem zweiten Wasserbehältnis 8 verbunden. Zudem ist die Ozonierungseinheit 6 mit einer Berieselungsanlage 10 gekoppelt 11, wobei sich der Auslass 12 der Berieselungsanlage 10 oberhalb des Wasserspiegels 13 des ersten Wasserbehältnisses 4 befindet. Ein Ozondetektor 14 ist so angebracht, dass die Ozonkonzentration im Filtrat im Ablauf 9 des ersten Wasserbehältnisses 4 detektiert werden kann. Dieser Detektor 14 ist mit der Ozonierungseinheit 6 verbunden 15. Der Ozonauslass 16 der Ozonierungseinheit 6 ist ebenfalls im ersten Wasserbehältnis 4 angebracht. Die UV-Einheit 7 ist so angebracht, dass das Filtrat im zweiten Wasserbehältnis 8 mit der UV-Einheit 7 bestrahlt wird 17.

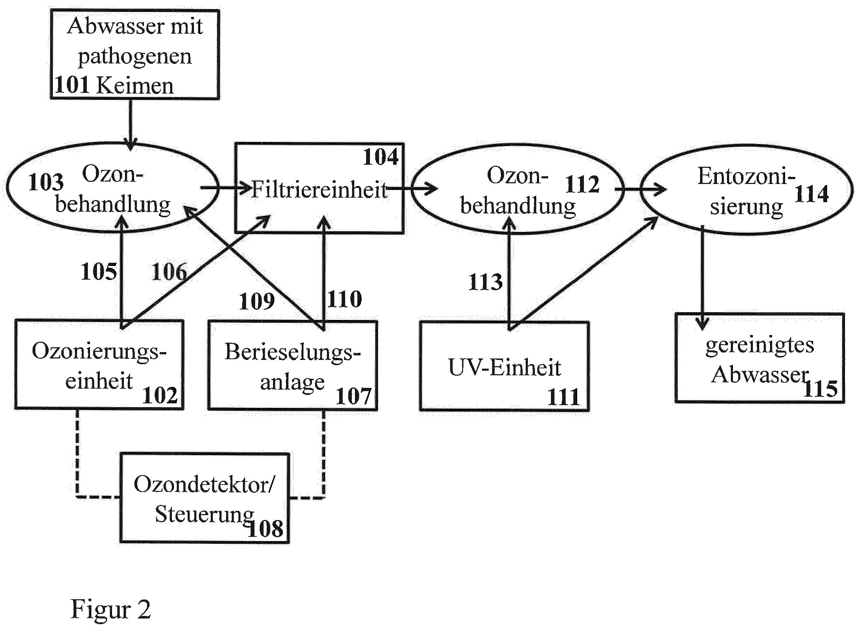

Die Abläufe bzw. das Zusammenspiel der einzelnen Komponenten des Multibarrieresystems in dem erfindungsgemäßen Verfahren sind in Figur 2 schematisch dargestellt:
Mit pathogenen Keimen belastete Abwässer 101 werden dem ersten Wasserbehältnis zugeführt. Mit Hilfe der Ozonisierungseinheit 102 werden diese Abwässer mit Ozon behandelt 103 und anschließend durch die Filtriereinheit 104 filtriert. Somit findet die Ozonisierung der mit pathogenen Keimen versetzten Abwässer nicht nur vor sondern auch während und nach der Filtration statt. Die Ozonisierungseinheit 102 wirkt somit nicht nur auf das Abwasser 105 sondern auch auf die Filtriereinheit ein 106 und verringert bzw. verhindert bei dieser das Verstopfen der Poren und das Fouling. Die Ozonierungseinheit 102 ist mit einer Berieselungsanlage 107 gekoppelt 108, wodurch der Ozongehalt im Abwasser mit Hilfe der mit einer Berieselungsanlage gekoppelten Ozonierungseinheit modifiziert werden kann 109. Zudem kann die Berieselungsanlage 107 zum Säubern der Filtriereinheit 104 verwendet werden 110. Anschließend wird das Filtrat über den mindestens einen Kanal in der Membranplatte in das zweite Wasserbehältnis eingeleitet und dort mittels der UV-Einheit 111 mit UV-Strahlung bestrahlt 112. Hierbei dient die UV-Behandlung nicht nur der Desinfektion 113 sondern auch der Entozonisierung des Abwassers 114. Das gereinigte Abwasser 115 kann letztendlich aus dem Containment abgelassen werden.

Wo in der vorliegenden Erfindung die Bezeichnung "umfassen" in der Beschreibung und den Ansprüchen verwendet wird, schließt diese weitere Ausführungsformen nicht aus. Gemäß der vorliegenden Erfindung handelt es sich bei der Bezeichnung "bestehen aus" um eine bevorzugte Ausführungsform der Bezeichnung "umfassen". Soweit in der voranstehenden Offenbarung eine Menge definiert ist, welche wenigstens eine gewisse Anzahl an Ausführungsbeispielen umfasst, so kann diese Definition auch dahingehend verstanden werden, dass eine Menge definiert ist, die vorzugsweise nur aus diesen Ausführungsformen besteht.

### Nachfolgend wird die vorliegende Erfindung anhand von Beispielen weiter erläutert:

### Beispiele

Ein 20 Fuß-Überseecontainer der mit drei Biologiekammern (Bio-Tanks) und einer Filtrationskammer mit einem Gesamtvolumen von ca. 13 m³ ausgestattet wurde, wird als dezentrale Kläranlage zur Entkeimung und Abwasseraufbereitung an den Abwasserzufluss eines Krankenhauses angeschlossen. Das Krankenhaus produziert ca. 50 m³/Tag zu reinigendes und hochgradig mit pathogenen Keimen und Fäkalien belastetes Abwasser.

Die drei Biologiekammern wurden neben Abwässern zu einem Drittel mit polymeren Bewuchsträgern für die biologische Reinigung befüllt und im MBBR-Verfahren betrieben. Die Kammern wurden regelmäßig durch den Einsatz von Hochleistungsblowern belüftet, so dass sich aerobe und anoxische Phasen abwechseln und eine biologische Reinigung des Wassers, umfassend Nährstoffabbau zu CO₂ sowie Nitrifikation und Denitrifikation sichergestellt waren.

In dem, der biologischen Reinigungstufe nachgeschalteten ersten Wasserbehältnis befindet sich die Filtriereinheit, die im vorliegenden Beispiel zwei Türme mit jeweils 8 aufeinander gestapelten Filtermodulen umfasst, wobei ein Filtermodul aus 35 flachen Membranplatten, eingegossen in eine Polyurethanhalterung mit eingebautem Filtratsammelkanal, besteht. Die Filtermodule sind so ausgestaltet, dass sie, im Unterdruckverfahren bei 150 mbar Unterdruck betrieben, schmutziges, aber bereits biologisch aufbereitetes Wasser ansaugen und das gesäuberte Wasser durch die innenliegenden Kanäle der Filtermembranen abziehen können. Partikel und Schwebstoffe mit einer Größe von über 200 nm werden zurückgehalten. In regelmäßigen Abständen werden die Filter durch Rückspülen gereinigt. In längeren Intervallen (bis zu mehreren Monaten) findet eine chemische Reinigung durch ein Rückspülen der Filter mit Zitronensäurelösung bzw. Natriumhypochlorit statt.

Die Filter selber bestehen aus einem 6mm dicken Al₂O₃-Substratkörper mit einer Porosität von ca. 39% und einer mittleren Porengröße von ca. 5µm. Auf dem Al₂O₃-Substrat befindet sich eine aufgesinterte ca. 50 µm dicke Mikrofiltrationstrennschicht mit Poren, die einen mittleren Porendurchmesser von 200 nm aufweisen, bestehend aus einer Mischung von ZrO₂ und Al₂O₃ verschiedener Körnungen. Die Mikrofiltrationsschicht selbst wird aus einem Beschichtungsschlicker hergestellt, der nanokristalline und mikrokristalline Partikel von ZrO₂ und/oder Al₂O₃ enthält.

Die Filtrationskammer ist mit einem oberhalb angebrachten Berieselungssystem ausgestattet, welches das durch einen Ozongenerator erzeugte Ozon, das in die Umgebungsluft austreten kann, wieder in das Wasser einbringt. Der Ozongenerator erzeugt dabei eine Ozonkonzentration von konstant 0,2 mg/l im ersten Wasserbehältnis, wobei das Ozon die Membran permeiert und im zweiten Wasserbehältnis noch eine Ozonkonzentration von 0,15 mg/l messbar ist. Nach Ausschalten des Ozongenerators sinkt die Ozonkonzentration im Permeattank nach ca. 30 Minuten unter die Nachweisgrenze, so dass nach dieser Zeit mit einer beginnenden Nachverkeimung zu rechnen wäre, würde das Filtrat nicht zusätzlich einer UV-Bestrahlung in dem zweiten Wasserbehältnis ausgesetzt.

Dazu wird das zweite Wasserbehältnis mit einer Quecksilberdampflampe ausgestattet, welche mit einer Wellenlänge bis 253 nm das Filtrat bestrahlt, welches an der Lampe vorbeigeführt wird.

Es wurden nachfolgende Messungen durchgeführt:
Messung der Gesamtkeimzahl im Zulauf zum ersten Wasserbehältnis: >1Mio Keime/ml
Messung der Gesamtkeimzahl nach der Filtration: 0-2 Keime/ml; Der Rückhalt beträgt somit fast 100 %, wodurch nur sehr wenige Keime im Filtrat verbleiben.

Im Zulauf des ersten Wasserbehältnisses wurden desweiteren folgende spezielle Modellkeime mit einer Konzentration von > 1Mio/ml eingebracht und die Rückhaltequote gemessen:
Escherichia coli, Pseudomonas aeruginosa sowie Mycobacterium terrae. In allen drei Fällen wurde eine Rückhaltequote von größer 99,90 % bestimmt.

Desweiteren wurden folgende Modellkeime mit einer Konzentration von > 1Mio/ml eingebracht und 3 Minuten mit einer Ozonkonzentration von 0.2 mg/l behandelt:
Escherichia coli, Mycobacterium terrae. Nach drei Minuten Ozonbehandlung konnten keine Keime mehr nachgewiesen werden. Nach Ausschalten des Ozongenerators ist bereits nach 30 Minuten kein Ozon mehr nachweisbar.

Eine Behandlung mit UV Licht an den voranstehend beschriebenen Keimen führt nach 30 Minuten ebenfalls zur vollständigen Inaktivierung dieser pathogenen Keime.

## Patentansprüche

1. Ein Multibarrierensystem zur Entfernung pathogener Keime aus Abwässern umfassend ein erstes Wasserbehältnis, eine regelbare Ozonierungseinheit, ein zweites Wasserbehältnis und eine UV-Einheit,
wobei das erste Wasserbehältnis eine Ozon-resistente Filtriereinheit umfasst, welche mindestens eine Membranplatte aus einer porösen oxidischen Keramik beinhaltet, wobei die Membranplatte außenseitig eine Beschichtung und innenliegend mindestens einen Kanal zur Ableitung des Filtrats aufweist, wobei die Poren der Membranplatte einen mittleren Durchmesser zwischen 1 µm und 10 µm aufweisen und die Beschichtung mindestens eine Trennschicht umfasst, die teilweise aus nanoskaligen und/oder mikroskaligen oxidischen Partikel besteht, wobei der mindestens eine Kanal der Membranplatte mit dem zweiten Wasserbehältnis verbunden ist so dass das Filtrat in das zweite Wasserbehältnis geleitet werden kann,
wobei die regelbare Ozonierungseinheit mit einer zuschaltbaren Berieselungsanlage gekoppelt ist, wobei der Ozonauslass der Ozonierungseinheit im ersten Wasserbehältnis angebracht ist und sich der Auslass der Berieselungsanlage oberhalb des Wasserspiegels des ersten Wasserbehältnisses befindet,
wobei die UV-Einheit so angebracht ist, dass das Filtrat im zweiten Wasserbehältnis mit der UV-Einheit bestrahlt wird und
wobei sich das erste Wasserbehältnis, die Filtriereinheit, die regelbare Ozonierungseinheit, das zweite Wasserbehältnis und die UV-Einheit in einem geschlossenen Containment befinden.

2. Multibarrierensystem gemäß Anspruch 1, wobei die poröse oxidische Keramik der Membranplatte Poren mit einem mittleren Durchmesser zwischen 1 µm und 6 µm, insbesondere zwischen 1 µm und 3 µm aufweist.

3. Multibarrierensystem gemäß der Ansprüche 1 oder 2, wobei es sich bei der porösen oxidischen Keramik um eine Keramik auf Basis von Aluminiumoxid handelt.

4. Multibarrierensystem gemäß einem der vorhergehenden Ansprüche, wobei die außenseitige Beschichtung der Membranplatte eine Dicke zwischen 100 nm und 150 µm, insbesondere von 25 µm bis 60 µm aufweist.

5. Multibarrierensystem gemäß Anspruch 4, wobei die Trennschicht Poren mit einem mittleren Durchmesser zwischen 1 nm und 1400 nm, vorzugsweise zwischen 50 nm und 300 nm, besonders bevorzugt zwischen 200 nm und 300 nm aufweist.

6. Multibarrierensystem gemäß den Ansprüchen 4 und 5, wobei die oxidischen Nanopartikel und/oder Mikropartikel der Trennschicht vorzugsweise aus der Gruppe ausgewählt sind bestehend aus Aluminiumoxid, Zirkoniumoxid, Titandioxid und Mischungen daraus.

7. Multibarrierensystem gemäß den Ansprüchen 4 bis 6, wobei die Beschichtung der Membranplatte mindestens eine weitere poröse Schicht umfasst, die zwischen der Membranplatte und der Trennschicht angeordnet ist.

8. Multibarrierensystem gemäß den Ansprüchen 1 bis 7, wobei die UV-Einheit eine Quecksilberdampflampe oder eine UV-LED-Lampe umfasst.

9. Multibarrierensystem gemäß den Ansprüchen 1 bis 8, wobei das Containment transportabel ist.

10. Multibarrierensystem gemäß dem Anspruch 9, wobei das Containment maximale Abmessungen von 6,06 m x 2,44 m x 2,59 m und vorzugsweise ein Höchstgewicht von 25.000 kg aufweist.

11. Ein Verfahren zur Entfernung von pathogenen Keimen aus Abwässern mittels des Multibarrierensystem gemäß den Ansprüchen 1 bis 10, das Verfahren umfassend die Schritte
a) Zufuhr von mit pathogenen Keimen belasteten Abwässern in das erste Wasserbehältnis,
b) Filtration der Abwässer durch die Filtriereinheit mit der mindestens einen beschichteten Membranplatte, wobei die Abwässer in dem ersten Wasserbehältnis während der Filtration mit Ozon behandelt werden und der Ozongehalt im Abwasser mit Hilfe der mit einer Berieselungsanlage gekoppelten Ozonierungseinheit gesteuert wird,
c) Einleiten des Filtrats über den mindestens einen Kanal in der Membranplatte, in das zweite Wasserbehältnis,
d) Bestrahlen des Filtrats in dem zweiten Wasserbehältnis mit UV-Strahlung in einem Wellenlängenbereich von 100 nm bis 300 nm und einer Dosis von 50 J/m² bis 2000 J/m².

12. Verfahren zur Entfernung von pathogenen Keimen aus Abwässern gemäß Anspruch 11, wobei die Gesamtkonzentration der sich im Wasser befindenden pathogenen Keime beim Ablassen des Filtrates aus dem zweiten Wasserbehältnis kleiner 100 KbE/ml, bevorzugter Weise kleiner 10 KbE/ml und am meisten bevorzugt kleiner 1 KbE/ml ist.

13. Ein Verfahren zur Entfernung von pathogenen Keimen aus Abwässern gemäß Anspruch 11, wobei die sich im Abwasser befindenden pathogenen Keime zu mindestens 99,90%, bevorzugter Weise zu mindestens 99,99% aus dem Abwasser entfernt werden.

14. Verfahren zur Entfernung von pathogenen Keimen aus Abwässern gemäß den Ansprüchen 11 bis 13, wobei das Ozon die mindestens eine Membranplatte der Ozon-resistenten Filtriereinheit während des Betriebes durchdringt.

15. Verfahren zur Entfernung von pathogenen Keimen aus Abwässern gemäß den Ansprüchen 11 bis 14, wobei die Ozonkonzentration im Filtrat im Ablauf des ersten Wasserbehältnisses detektiert wird und die dem ersten Wasserbehältnis zuzuführende Menge an Ozon so reguliert wird, dass die Konzentration an Ozon im Filtrat im Ablauf zwischen 0,1 mg/l und 0,3 mg/l beträgt.

16. Verfahren zur Entfernung von pathogenen Keimen aus Abwässern gemäß den Ansprüchen 11 bis 15, wobei die Ozonkonzentration im Luftraum in dem ersten Wassserbehältnis detektiert wird und die Berieselungsanlage ab einem Wert von 0,5 mg/m³, bevorzugter Weise ab einem Wert von 0,3 mg/m³ und am meisten bevorzugt ab einem Wert von 0,1 mg/m³ automatisch angeschaltet wird.

17. Verfahren zur Entfernung von pathogenen Keimen aus Abwässern gemäß den Ansprüchen 11 bis 16, wobei die Dosis der UV-Bestrahlung um den Faktor 2, bevorzugter Weise um den Faktor 3 und am meisten bevorzugt um den Faktor 4 gegenüber einem System zur Entfernung von pathogenen Keimen aus Abwässern, welches keine Filtriereinheit umfasst, reduziert ist.

18. Ein Verfahren zur Entfernung von pathogenen Keimen aus Abwässern gemäß den Ansprüchen 11 bis 17, wobei die Trübung des sich im zweiten Wasserbehältnisses befindlichen Wassers kleiner 1 NTU, bevorzugter Weise kleiner 0,5 NTU und am meisten bevorzugt kleiner 0,2 NTU ist.

19. Ein Verfahren zur Entfernung von pathogenen Keimen aus Abwässern gemäß den Ansprüchen 11 bis 18, wobei die Standzeit des Multibarrierensystems um den Faktor 5, bevorzugter Weise um den Faktor 10 und am meisten bevorzugt um den Faktor 15 gegenüber einem System zur Entfernung von pathogenen Keimen aus Abwässern ohne Ozonierungs- und UV-Einheit, verlängert ist.

20. Ein Verfahren zur Entfernung von pathogenen Keimen aus Abwässern gemäß den Ansprüchen 11 bis 19, wobei dem Verfahren eine biologische Reinigungsstufe und vorzugsweise eine MBBR-Reinigungsstufe vorgeschaltet ist.

21. Ein Verfahren zur Entfernung von pathogenen Keimen aus Abwässern gemäß den Ansprüchen 11 bis 20, wobei die pathogenen Keime ausgewählt sind aus der Gruppe bestehend aus Viren, Bakterien, Protozoen und Helminthen und besonders bevorzugt aus der Gruppe der Bakterien.

22. Ein Verfahren zur Entfernung von Pathogenen Keimen aus Abwässern gemäß dem Anspruch 20, wobei die Bakterien ausgewählt sind aus der Gruppe bestehend aus Escherichia coli, Salmonella, Shigella, Mykobakterium tuberculosis und Vibrio cholerae.

## Claims

1. A multi-barrier system for the removal of pathogenic microbes from waste water comprising a first water container, an adjustable ozonation unit, a second water container and a UV unit,
wherein the first water container comprises an ozone-resistant filtration unit containing at least one membrane plate of a porous oxidic ceramic, wherein the membrane plate has a coating outside and at least one channel inside for the drainage of the filtrate, wherein the pores of the membrane plate have an average diameter of between 1 µm and 10 µm and the coating comprises at least one separating layer consisting partially of nanoscale and/or microscale oxidic particles, wherein the at least one channel of the membrane plate is connected with the second water container such that the filtrate can be transferred into the second water container,
wherein the adjustable ozonation unit is coupled with a connectable sprinkler system, wherein the ozone outlet of the ozonation unit is installed in the first water container and the outlet of the sprinkler system is located above the water level of the first water container,
wherein the UV unit is installed such that the filtrate in the second water container is irradiated by the UV unit, and
wherein the first water container, the filtration unit, the adjustable ozonation unit, the second water container and the UV unit are placed in a closed containment.

2. Multi-barrier system according to claim 1, wherein the porous oxidic ceramic of the membrane plate has pores with an average diameter of between 1 µm and 6 µm, in particular between 1 µm and 3 µm.

3. Multi-barrier system according to claims 1 or 2, wherein the porous oxidic ceramic is a ceramic on the basis of aluminium oxide.

4. Multi-barrier system according to any of the preceding claims, wherein the outside coating of the membrane plate has a thickness of between 100 nm and 150 µm, in particular from 25 µm to 60 µm.

5. Multi-barrier system according to claim 4, wherein the separating layer has pores with an average diameter of between 1 nm and 1400 nm, preferably between 50 nm and 300 nm, particularly preferred between 200 nm and 300 nm.

6. Multi-barrier system according to claims 4 and 5, wherein the oxidic nanoparticles and/or microparticles of the separating layer are preferably selected from the group consisting of aluminium oxide, zirconium oxide, titanium dioxide, and mixtures thereof.

7. Multi-barrier system according to claims 4 to 6, wherein the coating of the membrane plate comprises at least one further porous layer arranged between the membrane plate and the separating layer.

8. Multi-barrier system according to claims 1 to 7, wherein the UV unit comprises a mercury vapour lamp or a UV-LED lamp.

9. Multi-barrier system according to claims 1 to 8, wherein the containment is transportable.

10. Multi-barrier system according to claim 9, wherein the containment has maximum dimensions of 6.06 m × 2.44 m × 2.59 m and preferably has a maximum weight of 25,000 kg.

11. A method for the removal of pathogenic microbes from waste water by means of a multi-barrier system according to claims 1 to 10, the method comprising the steps of
a) supply of waste water being contaminated with pathogenic microbes into the first water container,
b) filtration of the waste water through the filtration unit with the at least one coated membrane plate, wherein the waste water is treated with ozone during filtration in the first water container and the ozone content in the waste water is controlled by means of the ozonation unit being coupled with a sprinkler unit,
c) transferring the filtrate through the at least one channel of the membrane plate into the second water container,
d) irradiation of the filtrate in the second water container with UV radiation in a wavelength range of from 100 nm to 300 nm and a dose of from 50 J/m² to 2000 J/m².

12. Method for the removal of pathogenic microbes from waste water according to claim 11, wherein the total concentration of pathogenic microbes being present in the water upon release of the filtrate from the second water container is less than 100 KbE/ml, preferably less than 10 KbE/ml, and most preferably less than 1 KbE/ml.

13. Method for the removal of pathogenic microbes from waste water according to claim 11, wherein the pathogenic microbes being present in the waste water are removed from the waste water to an extent of at least 99.90%, preferably at least 99.99%.

14. Method for the removal of pathogenic microbes from waste water according to claims 11 to 13, wherein the ozone penetrates the at least one membrane plate of the ozone-resistant filtration unit during operation.

15. Method for the removal of pathogenic microbes from waste water according to claims 11 to 14, wherein the ozone concentration is detected in the filtrate in the outlet of the first water container and the amount of ozone to be supplied to the first water container is adjusted such that the concentration of ozone in the filtrate in the outlet is between 0.1 mg/l and 0.3 mg/l.

16. Method for the removal of pathogenic microbes from waste water according to claims 11 to 15, wherein the ozone concentration is detected in the airspace in the first water container and the sprinkler system is switched on automatically from a value of 0.5 mg/m³, preferably from a value of 0.3 mg/m³, and most preferably from a value of 0.1 mg/m³.

17. Method for the removal of pathogenic microbes from waste water according to claims 11 to 16, wherein the dose of UV irradiation is reduced by the factor of 2, preferably by the factor of 3, and most preferably by the factor of 4, compared with a system for the removal of pathogenic microbes which comprises no filtration unit.

18. Method for the removal of pathogenic microbes from waste water according to claims 11 to 17, wherein the turbidity of the water being present in the second water container is less than 1 NTU, preferably less than 0.5 NTU, and most preferably 0.2 NTU.

19. Method for the removal of pathogenic microbes from waste water according to claims 11 to 18, wherein the life time of the multi-barrier system is extended by the factor of 5, preferably by the factor of 10, and most preferably by the factor of 15, compared with a system for the removal of pathogenic microbes from waste water without ozonation and UV unit.

20. Method for the removal of pathogenic microbes from waste water according to claims 11 to 19, wherein a biological cleaning stage, and preferably a MBBR cleaning stage, is carried out upstream of the method.

21. Method for the removal of pathogenic microbes from waste water according to claims 11 to 20, wherein the pathogenic microbes are selected from the group consisting of viruses, bacteria, protozoa, and helminthes, and particularly preferred from the group of bacteria.

22. Method for the removal of pathogenic microbes from waste water according to claim 20, wherein the bacteria are selected from the group consisting of Escherichia coli, Salmonella, Shigella, Mycobacterium tuberculosis, and Vibrio cholerae.

## Revendications

1. Un système multi-barrières destiné à éliminer des germes pathogènes des eaux usées, comprenant un premier contenant à eau, une unité d'ozonisation réglable, un deuxième contenant à eau et une unité à UV,
le premier contenant à eau comprenant une unité de filtrage résistant à l'ozone, laquelle contient au moins une plaque à membrane en une céramique oxyde poreuse, la plaque à membrane comportant sur sa face extérieure un revêtement et sur sa face intérieure au moins un canal destiné à évacuer le produit filtré, les pores de la plaque à membrane présentant un diamètre moyen compris entre 1 µm et 10 µm et le revêtement comprenant au moins une couche séparatrice, qui est partiellement constituée de particules oxyde nanométriques et/ou micrométriques, l'au moins un canal de la plaque à membrane étant relié avec le deuxième contenant à eau, de telle sorte que le produit filtré puisse être conduit dans le deuxième contenant à eau,
l'unité d'ozonisation réglable étant couplée à un système d'arrosage pouvant être mis en circuit, la sortie d'ozone de l'unité d'ozonisation étant montée dans le premier contenant à eau et la sortie du système d'arrosage se trouvant au-dessus du niveau d'eau du premier contenant à eau,
l'unité d'UV étant montée de telle sorte que dans le deuxième contenant, le produit filtré soit irradié par l'unité d'UV et le premier contenant à eau, l'unité de filtrage, l'unité d'ozonisation réglable, le deuxième contenant à eau et l'unité d'UV se trouvant dans un confinement clos.

2. Système multi-barrières selon la revendication 1, la céramique oxyde poreuse de la plaque à membrane comportant des pores d'un diamètre moyen compris entre 1 µm et 6 µm, notamment entre 1 µm et 3 µm.

3. Système multi-barrières selon la revendication 1 ou la revendication 2, la céramique oxyde poreuse étant une céramique sur base d'oxyde d'aluminium.

4. Système multi-barrières selon l'une quelconque des revendications précédentes, le revêtement sur la face externe de la plaque à membrane présentant une épaisseur comprise entre 100 nm et 150 µm, notamment de 25 µm à 60 µm.

5. Système multi-barrières selon la revendication 4, la couche séparatrice comportant des pores d'un diamètre moyen compris entre 1 nm et 1400 nm, de préférence entre 50 nm et 300 nm, de manière particulièrement préférée entre 200 nm et 300 nm.

6. Système multi-barrières selon les revendications 4 et 5, les nanoparticules et/ou microparticules oxydes de la couche séparatrice étant choisies de préférence dans le groupe composé d'oxyde d'aluminium, d'oxyde de zirconium, d'oxyde de titane et de mélanges de ces derniers.

7. Système multi-barrières selon les revendications 4 à 6, le revêtement de la plaque à membrane comprenant au moins une couche poreuse supplémentaire qui est placée entre la plaque à membrane et la couche séparatrice.

8. Système multi-barrières selon les revendications 1 à 7, l'unité à UV comprenant une lampe à vapeur de mercure ou une lampe UV à LED.

9. Système multi-barrières selon les revendications 1 à 8, le confinement étant transportable.

10. Système multi-barrières selon la revendication 9, le confinement présentant des dimensions maximales de 6,06 m x 2,44 m x 2,59 m et de préférence un poids maximal de 25.000 kg.

11. Un procédé destiné à éliminer des germes pathogènes d'eaux usées à l'aide du système multi-barrières selon les revendications 1 à 10, le procédé comprenant les étapes :
a) de l'alimentation d'eaux usées chargées de germes pathogènes dans le premier contenant à eau,
b) du filtrage des eaux usées par l'unité de filtrage à l'aide de l'au moins une plaque à membrane revêtue, pendant le filtrage, les eaux usées étant traitées à l'ozone dans le premier contenant à eau et la teneur en ozone dans les eaux usées étant commandée à l'aide de l'unité d'ozonisation couplée à un système d'arrosage,
c) de l'introduction du produit filtré par l'intermédiaire d'au moins un canal dans la plaque à membrane dans le deuxième contenant à eau,
d) de l'irradiation du produit filtré dans le deuxième contenant à eau par un rayonnement UV, dans une gamme de longueurs d'ondes de 100 nm à 300 nm et à une dose de 50 J/m² à 2000 J/m².

12. Procédé destiné à éliminer des germes pathogènes d'eaux usées selon la revendication 11, la concentration totale des germes pathogènes se trouvant dans l'eau lors de l'évacuation du produit filtré hors du deuxième contenant à eau étant inférieure à 100 KbE/ml, de manière préférable inférieure à 10 KbE/ml et de manière la plus préférable de 1 KbE/ml.

13. Un procédé destiné à éliminer des germes pathogènes d'eaux usées selon la revendication 11, les germes pathogènes se trouvant dans les eaux usées étant éliminés au moins à raison de 99,90 %, de manière préférable au moins à raison de 99,99 % hors des eaux usées.

14. Procédé destiné à éliminer des germes pathogènes d'eaux usées selon les revendications 11 à 13, l'ozone traversant l'au moins une plaque à membrane de l'unité de filtrage résistant à l'ozone en cours de fonctionnement.

15. Procédé destiné à éliminer des germes pathogènes d'eaux usées selon les revendications 11 à 14, la concentration d'ozone dans le produit filtré étant détectée à la sortie du premier contenant à eau et la quantité d'ozone qui doit être alimentée vers le premier contenant d'eau étant régulée en ozone, de telle sorte que la concentration en ozone dans le produit filtré soit comprise entre 0,1 mg/l et 0,3 mg/l à la sortie.

16. Procédé destiné à éliminer des germes pathogènes d'eaux usées selon les revendications 11 à 15, la concentration d'ozone dans l'espace d'air dans le premier contenant à eau étant détectée et le système d'arrosage se mettant automatique en marche à partir d'une valeur de 0,5 mg/m³, de manière préférable à partir d'une valeur de 0,3 mg/m³ et de la manière la plus préférable, à partir d'une valeur de 0,1 mg/m³.

17. Procédé destiné à éliminer des germes pathogènes d'eaux usées selon les revendications 11 à 16, la dose du rayonnement UV étant réduite du coefficient 2, de manière préférable du coefficient 3 et de manière la plus préférable du coefficient 4 par rapport à un système destiné à éliminer des germes d'eaux usées, lequel ne comprend aucune unité de filtrage.

18. Un procédé destiné à éliminer des germes pathogènes d'eaux usées selon les revendications 11 à 17, la turbidité de l'eau se trouvant dans le deuxième contenant à eau étant inférieure à 1 NTU, de manière préférable, inférieure à 0,5 NTU et de manière la plus préférable, inférieure à 0,2 NTU.

19. Un procédé destiné à éliminer des germes pathogènes d'eaux usées selon les revendications 11 à 18, la durabilité du système multi-barrières étant prolongée du coefficient 5, de manière préférable du coefficient 10 et de la manière la plus préférable du coefficient 15 par rapport à un système destiné à éliminer des germes pathogènes d'eaux usées sans unité ozonisation et sans unité à UV.

20. Un procédé destiné à éliminer des germes pathogènes d'eaux usées selon les revendications 11 à 19, en amont du procédé étant montée une étape de nettoyage biologique et une étape de nettoyage MBBR (réacteurs à bio-film à lit fluidisé).

21. Un procédé destiné à éliminer des germes pathogènes d'eaux usées selon les revendications 11 à 20, les germes pathogènes étant choisis dans le groupe composé des virus, des bactéries, des protozoaires et des helminthes, de manière particulièrement préférable du groupe des bactéries.

22. Un procédé destiné à éliminer des germes pathogènes d'eaux usées selon la revendication 20, les bactéries étant choisies dans le groupe composé de l'Escherichia coli, des salmonelles, des shigella, des mycobactéries tuberculosis et des Vibrio cholerae.
